## Europäisches Patentamt
## European Patent Office
## Office européen des brevets

(19)

(11) Numéro de publication: **0 011 539**
**B1**

(12) **FASCICULE DE BREVET EUROPEEN**

(45) Date de publication du fascicule du brevet: **12.01.83**

(51) Int. Cl.³: **B 29 F 3/10, G 02 B 5/16**

(21) Numéro de dépôt: **79400815.1**

(22) Date de dépôt: **31.10.79**

(54) Procédé et dispositif pour la fabrication d'un profilé cylindrique alvéolé.

(30) Priorité: **17.11.78 FR 7832530**

(43) Date de publication de la demande:
**28.05.80 Bulletin 80/11**

(45) Mention de la délivrance du brevet:
**12.01.83 Bulletin 83/2**

(84) Etats contractants désignés:
**BE CH DE GB IT**

(56) Documents cités:
**FR - A - 1 044 316
FR - A - 1 133 767
FR - A - 2 044 740
GB - A - 449 625
US - A - 1 586 737
US - A - 2 440 668**

(73) Titulaire: **LIGNES TELEGRAPHIQUES ET
TELEPHONIQUES L.T.T.
1, rue Charles Bourseul
F-78702 Conflans Ste Honorine (FR)**

(72) Inventeur: **Hulin, Jean-Pierre LIGNES
TELEGRAPHIQUES
ET TELEPHONIQUES Rue Charles Bourseul
F-78702 - Conflans-Ste Honorine (FR)**
Inventeur: **de Vecchis, Michel LIGNES
TELEGRAPHIQUES
ET TELEPHONIQUES Rue Charles Bourseul
F-78702 - Conflans-Ste Honorine (FR)**

(74) Mandataire: **Guyot, Liliane et al,
Thomson-CSF SCPI 173, Boulevard Haussmann
F-75360 Paris Cedex 08 (FR)**

Procédé et dispositif de fabrication d'un profilé cylindrique alvéolé

La présente invention concerne un procédé et un dispositif de fabrication d'un profilé cylindrique présentant des alvéoles longitudinales ou hélicoïdales simples ou à pas alterné munies de lèvres venant pratiquement au contact l'une de l'autre. Une telle structure est notamment destinée à la réalisation de supports pour câbles utilisant des fibres optiques comme véhicule des signaux à transmettre et plus particulièrement de câbles du type décrit dans la demande de brevet français n° 2 381 326 déposée par la Demanderesse le 18 fevrier 1977 pour: "Elément de câble incorporant les fibres optiques".

On a décrit dans la demande de brevet déposée par la Demanderesse le 4 janvier 1978, pour: "Procédé d'usinage en continu de support pour guides d'ondes électromagnétiques", et publiée sous le numéro 2 413 962, et sa première addition déposée le 13 juin 1978, publiée sous le numéro 2 428 513, un procédé d'usinage en continu de rainures dans un profilé cylindrique plein, par élimination de la matière au droit des rainures à l'aide d'un tête d'usinage mobile en rotation autour de l'axe du cylindre et portant des outils découpant lesdites rainures. Un tel procédé aboutit à la réalisation de profilés avec rainures à profil ouvert.

La présente invention assure la formation d'alvéoles à lèvres au cours de l'opération d'extrusion sans réduction de la vitesse linéaire d'extrusion.

En outre, on connaît déjà du brevet britannique GB—A—449 625 une installation de fabrication de conduits destinés à recevoir des conducteurs électriques et mettant en oeuvre l'extrusion d'une matière plastique diélectrique à travers un orifice dont la forme est telle que ledit conduit présente en fin de fabrication deux canaux récepteurs dont chacun présente une paroi longitudinale permettant d'obturer le canal ou de l'ouvrir. Cette installation présente l'inconvénient de nécessiter des dispositifs annexes disposés en aval de l'extrudeuse. Il en va de même avec la demande de brevet français FR—A—2 044 740 où une gaine en matière plastique pour câble à conducteurs linéaires comporte un canal longitudinal et une rainure de fixation formés au cours de l'extrusion de la gaine, l'ouverture du canal longitudinal étant obtenue par déchirement ultérieur après refroidissement de la gaine.

Le procédé et le dispositif selon l'invention ne présentent pas les inconvénients précités.

L'invention a pour objet un procédé de fabrication en continu d'un profilé cylindrique en un matériau diélectrique présentant des alvéoles longitudinales superficielles ouvertes vers l'extérieur et pratiquement refermées par des lèvres se faisant face, à l'aide d'une extrudeuse à tête d'équerre comportant une filière et un guide-fil caractérisé en ce qu'il comporte les étapes suivantes: extrusion d'un jonc cylindrique à travers la filière en utilisant le guide-fil dont la face aval porte une série d'éléments longitudinaux rigides définissant des alvéoles dans le jonc; ouverture, après la sortie de la filière et à une certaine distance de celle-ci, d'une fente longitudinale dans chacune des alvéoles par rupture du matériau situé entre chacune desdites alvéoles et l'extérieur du jonc, à l'aide d'un dispositif solidaire de l'extrémité aval desdits éléments longitudinaux; remplissage des alvéoles pour la durée du durcissement du matériau à l'aide de tronçons de fils souples portés par l'extrémité aval desdits éléments longitudinaux et dans le prolongement de ces derniers.

L'invention a également pour objet un dispositif de fabrication en continu d'un profilé cylindrique en un matériau diélectrique présentant des alvéoles longitudinales superficielles ouvertes vers l'extérieur et pratiquement refermées par des lèvres se faisant face, et comprenant une extrudeuse à tête d'équerre comportant une filière et un guide-fil caractérisé en ce que la face aval du guide-fil porte une série d'éléments longitudinaux rigides définissant des alvéoles dans le jonc et en ce que chacun desdits éléments longitudinaux rigides porte à son extrémité aval un dispositif de coupe et est prolongé par un tronçon de fil souple destiné à remplir une alvéole pendant le refroidissement dudit matériau. Le dispositif de coupe peut être un couteau ou un fil cambré. Lesdits éléments longitudinaux peuvent être des piges métalliques. Selon une variante, la filière est fixe et le guide-fil est entraîné en rotation de manière à réaliser des alvéoles hélicoïdales ou à pas alterné.

La formation des alvéoles, sans enlèvement de matière après extrusion, permet la formation de lèvres refermant pratiquement l'alvéole et assure une protection efficace d'une fibre disposée dans celle-ci.

La formation des alvéoles à lèvres à l'intérieur du profil cylindrique défini par la filière d'extrusion conduit à une structure relativement peu fragile susceptible d'être stockée, sans risque, sur un touret.

Les autres avantages de la présente invention consistent essentiellement en une simplification de la fabrication du profilé puisqu'il assure la formation simultanée des alvéoles et des lèvres au cours même de l'opération d'extrusion. Evitant toute reprise du profilé, il est particulièrement bien adapté à une fabrication en continu d'un câble à fibres optiques en couplage, par exemple, avec un poste de pose des fibres du type décrit dans la demande de brevet français déposée par la Demanderesse le 1er mars 1978 pour : "Perfectionnements à la fabrication d'éléments de câblage comportant des fibres optiques" et publiée sous le numéro 2 418 940.

L'invention sera bien comprise en se reportant à la description suivante et aux figures qui l'accompagnent données à titre d'illustration non limitative et dans lesquelles:
— la figure 1 représente les différentes étapes du procédé selon l'invention;
— les figures 2, 3 et 4 représentent des vues agrandies partielles de la tête de l'extrudeuse;
— la figure 5 représente des sections partielles de profilés réalisées par le procédé de l'invention.

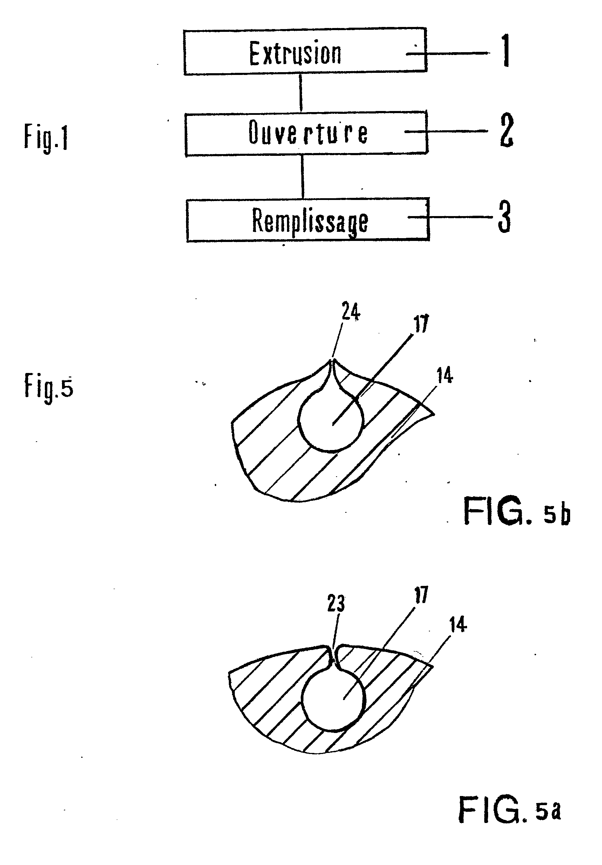

L'invention concerne une extrusion directe de profilés de forme extérieure cylindrique présentant des alvéoles longitudinales ou hélicoïdales à pas simple ou alterné réparties au voisinage de la surface extérieure du cylindre et refermées, à la surface, par deux lèvres se faisant face et dirigées l'une vers l'autre. De tels profilés sont représentés en coupe sur la figure 5. Selon l'invention, on extrude le matériau constituant le profilé dans une machine d'un type habituellement utilisé à cet usage dans laquelle le guide-fil de la tête d'équerre présente sur sa partie antérieure (en aval en considérant l'écoulement du matériau) des éléments rigides répartis uniformément sur une circonférence de diamètre inférieur à celui de l'ouverture de la filière. Ces éléments rigides définissent dans le matériau des canaux fermés qui, après durcissement, seront vides de matière. L'opération d'extrusion est représentée en 1 sur la figure 1. Les canaux ainsi creusés sont munis d'une ouverture longitudinale ou hélicoïdale faisant communiquer le canal avec l'extérieur du profilé. L'opération d'ouverture est représentée en 2 sur la figure 1. L'opération d'ouverture est faite à la sortie immédiate de la filière d'extrusion sur du matériau encore déformable. Afin d'éviter la déformation des canaux définis lors de l'extrusion des moyens de remplissage desdits canaux sont associés au guide-fil sur une longueur de profilé correspondant à un abaissement de température suffisant pour assurer la conservation de la forme du profilé. Ainsi qu'il sera précisé ultérieurement, ce remplissage est assuré à l'aide de fils souples d'un diamètre inférieur à celui des éléments ayant défini les canaux et prolongeant ceux-ci. Lorsque l'on désire obtenir des canaux hélicoïdaux, il est prévu de faire tourner le guide-fil par rapport au corps fixe de l'extrudeuse à une vitesse angulaire qui dépend à la fois de la vitesse de défilement du profilé et du pas de l'hélice souhaité. Ce pas peut être constant ou non ou alterné ainsi qu'il est connu. L'utilisation d'un remplissage des canaux par un fil souple évite toute déformation de ceux-ci résultant de la traction et de la rotation du profilé avant que le matériau ne soit durci (opération 3). Ce remplissage est nécessaire pour éviter tout affaissement de la matière qui viendrait reboucher les canaux formés au cours de l'extrusion. La découpe des alvéoles suivant une directrice extérieure est assurée par des moyens solidaires de l'extrémité avale des éléments longitudinaux définissant les canaux. L'expérience a montré que les différentes opérations subies par le profilé au moment et juste après l'extrusion ne limitent par la vitesse de production de l'extrudeuse.

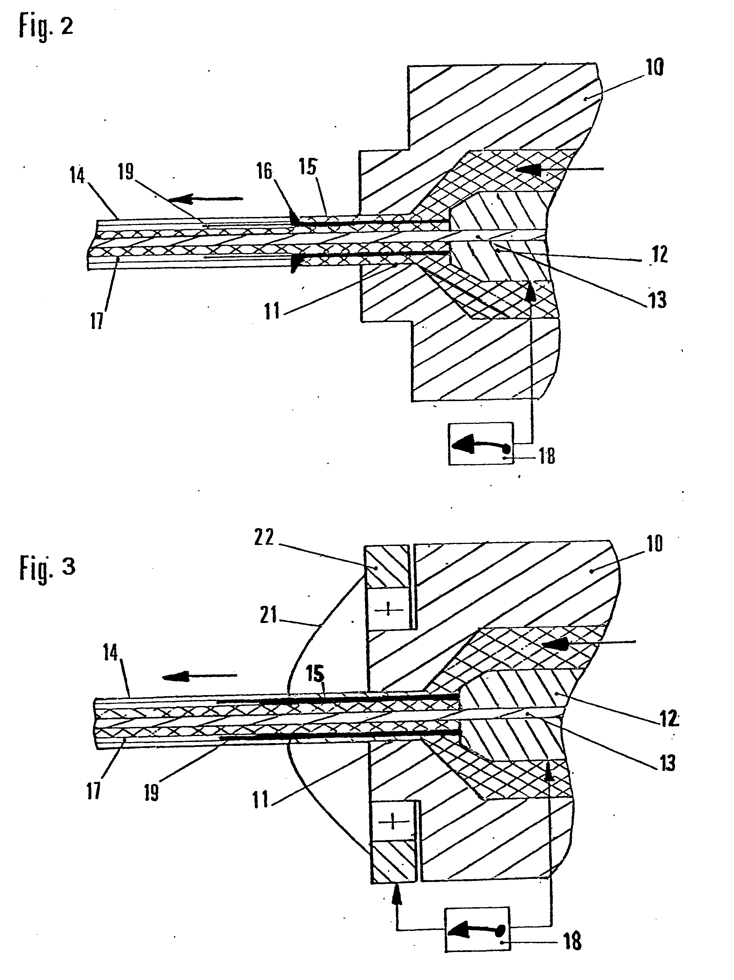

On a représenté sur la figure 2 à plus grande échelle une première variante de guide-fil permettant la mise en oeuvre du procédé. On a représenté en 10 le corps de l'extrudeuse terminé par la filière d'extrusion 11. On reconnait en 12 l'extrémité aval du guide-fil creusé d'un passage pour un élément raidisseur 13 qui serait enrobé dans le profilé 14 au cours de l'extrusion. Il est bien entendu que 13 n'appartient pas à l'objet de la présente invention. Le sens d'écoulement de la matière est représenté par les flèches. Ainsi qu'il apparait, la face terminale du guide-fil 12 porte des piges 15 (dont deux seulement sont apparentes sur la vue en coupe de la figure 2) réparties sur une circonférence légèrement inférieure à celle de l'ouverture de la filière 11. La longueur de ces piges est choisie de façon qu'elles dépassent légèrement de la face avale de la filière 11. Les piges sont terminées chacune par un couteau 16 triangulaire prolongeant ladite pige et dont la lame se trouve sur le côté dirigé vers l'extérieur et dont le diamètre maximum est supérieur au diamètre de l'ouverture de la filière 11. Ces couteaux 16 ont pour objet de découper la mince pellicule de matière qui se trouve entre le canal défini par la pige 15 associée et la périphérie du profilé. Le profilé 14 tel qu'il est représenté sur la figure présente donc une âme centrale 13 enrobée dans le matériau extrudé sur une épaisseur définie par la distance de l'âme 13 à l'ouverture de la filière 11 et présentant des alvéoles 17 définies par les piges 15 et débouchant à la périphérie grâce aux découpes assurées par les couteaux 16. Le profil en est représenté à plus grande échelle sur la figure 5a. On a représenté en 18 d'une façon schématique un asservissement en rotation du guide-fil 12, nécessaire ainsi qu'on l'expliquera plus loin dans le cas où l'on désire obtenir des rainures hélicoïdales à pas simple ou alterné. Les couteaux 16 sont prolongés par des fils souples 19 engagés dans le fond des canaux et assurant le remplissage de ceux-ci pour éviter qu'ils ne se bouchent par suite de l'effondrement du matériau plastique encore relativement mou à la sortie de l'extrudeuse. La longueur de ce fil 19 est choisie en fonction de la nature du matériau extrudé et de la vitesse d'extrusion. Dans le cas de rainures hélicoïdales ou à pas alterné, il est essentiel que les fils de remplissage soient souples pour éviter toute déformation des rainures résultant des efforts dûs à la rotation. Les piges 15 doivent au contraire être rigides et présenter un état de surface identique à celui de guide-fil en vue d'une extrusion correcte.

La figure 3 représente une deuxième variante de mise en oeuvre. Les éléments identiques à ceux de la figure 2 portent les mêmes numéros de référence. Selon cette variante, les couteaux 16 sont supprimés, la découpe des canaux étant assurée à l'aide d'un fil 21 porté par l'extrémité des piges 15 cambré vers l'arrière et solidaire d'une couronne 22 de diamètre nettement supérieur à celui de l'ouverture de la filière 11. Dans le cas d'alvéoles hélicoïdales, la couronne 22 est entraînée en rotation en synchronisme avec le guide-fil 12 ainsi qu'il est représenté en 18. Dans le cas d'alvéoles longitudinales la couronne est solidaire de la tête d'extrusion. La figure 5b représente une coupe partielle du profilé obtenu.

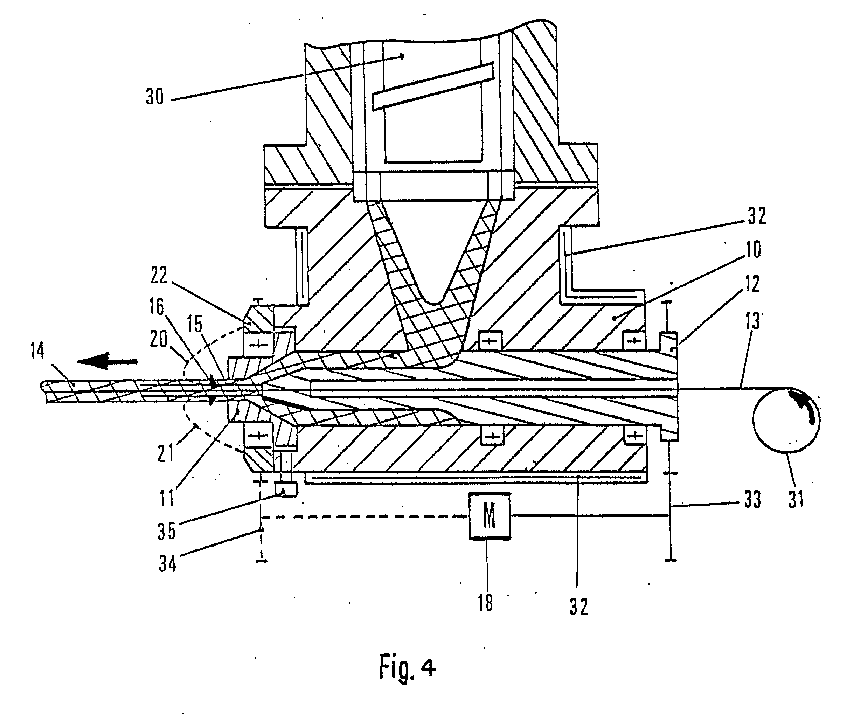

La figure 4 est une vue en coupe de la tête d'équerre 10 d'une extrudeuse permettant la mise en oeuvre de l'invention. Les éléments identiques à ceux des figures précédentes portent les mêmes numéros de référence. On a figuré en 30 la vis d'amenée du matériau plastique fondu destiné à constituer le profilé. On a représenté en 31 la bobine de réserve de l'âme centrale 13. Il est bien évident que cette âme centrale correspond à une utilisation particulière de l'invention et ne fait pas partie de la mise en oeuvre du procédé. Les résistances chauffantes 32 assurent la mise en température du matériau qui remplit l'ensemble du volume représenté un hachures croisées. Les piges qui prolongent le guide-fil 12 apparaissent en 15 ainsi que les couteaux 16. On a représenté en pointillé la variante de la figure 3 comportant la découpe par le fil 21 associé à la couronne 22. Le moteur entraîne en rotation le guide-fil 12 et éventuellement la couronne 22, par l'intermédiaire des séries d'engrenages, respectivement 33 et 34. On a schématisé en 35 le dispositif de réglage du centrage de la filière qui existe sur toutes les machines d'extrusion.

Les figures 5a et 5b représentent une coupe partielle des profilés alvéolés obtenus par les moyens de mise en oeuvre représentés respectivement sur les figures 2 et 3. Le profilé 14 est muni d'alvéoles 17 dont une seule est représentée sur chacune des figures 5. Ainsi qu'il apparaît la section de l'alvéole du profilé de la figure 5a reste circulaire et la découpe réalisée par le couteau 16 fait communiquer l'alvéole avec l'extérieur du profilé selon une fente radiale 23. Au contraire l'alvéole du profilé de la figure 5b présente une déformation "en poire" dont la queue 24 serait dirigée vers la périphérie, résultant du fait que la déformation due au fil 20 est plus progressive puisqu'il provoque l'ouverture de l'alvéole par rupture par déformation et non par découpe.

## Revendications

1. Procédé de fabrication en continu d'un profilé cylindrique (14) en un matériau diélectrique présentant des alvéoles longitudinales (17) superficielles ouvertes vers l'extérieur et pratiquement refermées par des lèvres se faisant face, à l'aide d'une extrudeuse (10) à tête d'équerre comportant une filière (11) et un guide-fil (12) caractérisé en ce qu'il comporte les étapes suivantes:
—extrusion (1) d'un jonc cylindrique à travers la filière (11) en utilisant le guide-fil (12) dont la face aval porte une série d'éléments longitudinaux rigides (15) définissant des alvéoles (17) dans le jonc;
—ouverture (2), après la sortie de la filière (11) et à une certaine distance de celle-ci, d'une fente longitudinale dans chacune des alvéoles (17) par rupture du matériau situé entre chacune desdites alvéoles (17) et l'extérieur du jonc, à l'aide d'un dispositif (16, 21) solidaire de l'extrémité aval desdits éléments longitudinaux (15);
—remplissage (3) des alvéoles (17) pour la durée du durcissement du matériau à l'aide de tronçons de fils souples (21) portés par l'extrémité aval desdits éléments longitudinaux (15) et dans la prolongement de ces derniers.

2. Dispositif pour la fabrication en continu d'un profilé cylindrique (14) en un matériau diélectrique présentant des alvéoles longitudinales (17) superficielles ouvertes vers l'extérieur et pratiquement refermées par des lèvres se faisant face, et comprenant une extrudeuse (10) à tête d'équerre comportant une filière (11) et un guide-fil (12), caractérisé en ce que la face aval du guide-fil (12) porte une série d'éléments longitudinaux rigides (15) définissant des alvéoles (17) dans le jonc (14) et en ce que chacun desdits éléments longitudinaux rigides (15) porte à son extrémité aval un dispositif de coupe (16, 21) et est prolongé par un tronçon (19) de fil souple destiné à remplir une alvéole (17) pour la durée du durcissement dudit matériau.

3. Dispositif selon la revendication 2, caractérisé en ce que ledit dispositif de coupe est un couteau (16).

4. Dispositif selon la revendication 2, caractérisé en ce que ledit dispositif de coupe est un fil cambré (21) dont une extrémité est solidaire de ladite extrémité dudit élément longitudinal rigide (15) et dont l'autre extrémité est solidaire d'une couronne (22) portée par le corps de l'extrudeuse (10).

5. Dispositif selon l'une des revendications 2 à 4, caractérisé en ce que lesdits éléments longitudinaux rigides sont des piges métalliques (15).

6. Dispositif selon l'une des revendications 2 à 5, caractérisé en ce que la filière (11) est fixe et en ce que le guide-fil (12) est entraîné en rotation de manière à réaliser des alvéoles (17) hélicoïdales ou à pas alterné.

## Claims

1. Method of continuously producing a cylindrical profiled body (14) of dielectric material having longitudinal surface cavities (17) outwardly opening and substantially closed by facing lips, by means of an extruder (10) having an angled extruder head comprising a die (11) and a wire guide (12), characterized in that it comprises the following steps:

—Extrusion (1) of a cylindrical cord through the die (11) using the wire guide (12) of which the downstream face carries a series of longitudinal stiff members (15) defining the cavities (17) in the cord;

—Opening (2) a longitudinal slot in each of the cavities (17) by rupture of the material between each of the cavities (17) and the outside of the cord after its exit from the die (11) and at a certain distance therefrom, by means of a device (16, 21) joined to the downstream end of said longitudinal members (15);

—Filling (3) the cavities (17) during curing of the material by means of flexible wire sections (21) carried by the downstream end of said longitudinal members (15) in extension thereof.

2. Device for continuously producing a cylindrical profiled body (14) of dielectric material having longitudinal surface cavities (17) opening outwardly and substantially closed by facing lips, and comprising an extruder (10) having an angled extruder head comprising a die (11) and a wire guide (12), characterized in that the downstream face of the wire guide (12) carries a series of longitudinal rigid members (15) defining the cavities (17) in the cord (14), and in that each of the longitudinal rigid members (15) carries a cutting device (16, 21) on its downstream end and is extended by a flexible wire section (19) for filling a cavity (17) during curing of the material.

3. Device in accordance with claim 2, characterized in that said cutting device is a cutter (16).

4. Device in accordance with claim 2, characterized in that said cutting device is a bent wire (21) of which one end is joined to said end of the longitudinal rigid member (14) and the other end is joined to a ring (22) carried by the body of the extruder (10).

5. Device in accordance with any of claims 2 to 4, characterized in that said longitudinal rigid members are metallic rods (15).

6. Device in accordance with any of claims 2 to 5, characterized in that said die (11) is stationary and in that said wire guide (12) is rotated in a manner to form helical cavities (17) or alternating pitch cavities.

**Patentansprüche**

1. Verfahren zur kontinuierlichen Herstellung eines zylindrischen Profilkörpers (14) aus einem dielektrischen Material mit in Längsrichtung verlaufenden Zellen (17) an der Oberfläche, die nach außen offen und durch einander zugewandte Lippen praktisch geschlossen sind, mittels einer Strangpresse (10) mit abgewinkeltem Spritzkopf, der ein Mundstück (11) une eine Drahtführung (12) aufweist, dadurch gekennzeichnet, daß es die folgenden Schritte umfaßt:

—Extrudiern (1) eines zylindrischen Stranges aus dem Mundstück (11) unter Verwendung der Drahtführung (12), deren Abströmseite eine Reihe von starren Längselementen (15) trägt, welche Zellen (17) in dem Strang definieren;

—Öffnen (2) eines Längsschlitzes in jeder Zelle (17) durch Aufbrechen des Materials zwischen jeder Zelle (17) und der Außenseite des Stranges nach dem Austreten aus dem Mundstück (11) und in einer bestimmten Entfernung von diesem mittels einer Vorrichtung (16, 21), die fest mit dem Abströmende der Längselemente (15) verbunden ist;

—Füllen (3) der Zellen (17) während der Aushärtdauer des Materials mittels flexibler Drahtabschnitte (21), die an dem Abströmende der Längselemente (15) und in der Verlängerung derselben angebracht sind.

2. Vorrichtung zur kontinuierlichen Herstellung eines zylindrischen Profilkörpers (14) aus einem dielektrischen Material, der in Längsrichtung an der Oberfläche verlaufende Zellen (17) umfaßt, die nach außen offen und durch einander zugewandte Lippen praktisch geschlossen sind, mit einer Strangpresse (10), die einen abgewinkelten Extruderkopt mit einem Mundstück (11) und einer Drahtführung (12) aufweist, dadurch gekennzeichnet, daß die Abströmseite der Drahtführung (12) eine Reihe von starren Längselementen (15) trägt, die Zellen (17) in dem Strang (14) definieren, und daß jedes dieser starren Längselemente (15) an seinem Abströmende eine Schneidvorrichtung (16, 21) trägt und durch einen flexiblen Drahtabschnitt (19) verlängert ist, der dazu bestimmt ist, eine Zelle (17) während der Aushärtdauer des Materials auszufüllen.

3. Vorrichtung nach Anspruch 2, dadurch gekennzeichnet, daß die Schneidvorrichtung ein Messer (16) ist.

4. Vorrichtung nach Anspruch 2, dadurch gekennzeichnet daß die Schneidvorrichtung ein gebogener Draht (21) ist, dessen eines Ende fest mit dem genannten Ende des starren Längselementes (15) und dessen anderes Ende fest mit einem Kranz (22) verbunden ist, der an dem Körper der Strangpresse (10) gehalten ist.

5. Vorrichtung nach einem der Ansprüche 2 bis 4, dadurch gekennzeichnet, daß die starren Längselemente Metallstäbe (15) sind.

6. Vorrichtung nach einem der Ansprüche 2 bis 5, dadurch gekennzeichnet, daß das Mundstück (11) feststehend ist und daß die Drahtführung (12) mit einer Drehbewegung angetrieben ist, um schraubenförmige Zellen (17) oder solche mit abwechselnder Teilung zu bilden.

Fig.1

| Extrusion | — 1 |
| Ouverture | — 2 |
| Remplissage | — 3 |

Fig.5

FIG. 5b

FIG. 5a

Fig. 2

Fig. 3

Fig. 4

0011539